# DEMANDE DE BREVET EUROPEEN

(11) **EP 3 763 511 A1**
(43) Date de publication de la demande: **13.01.2021**
(21) Numéro de dépôt: 20184564.1
(22) Date de dépôt: 07.07.2020
(51) Int. Cl.: B29C 64/214, B29C 64/236, B33Y 30/00

(54) **DISPOSITIF D'APPLICATION DE COUCHES DE PÂTE POUR UNE MACHINE DE FABRICATION DE PIÈCES CÉRAMIQUES PAR STÉRÉOLITHOGRAPHIE**

(30) Priorité: 08.07.2019 FR 1907636
(71) Demandeur: S.A.S 3DCeram-Sinto, 87280 Limoges (FR)
(72) Inventeur: CHAPUT, Christophe, 87410 Le-Palais-sur-Vienne (FR); GAIGNON, Richard, 91770 Saint-Vrain (FR); NGUYEN, Marc, 87110 Le Vigen (FR); ROUSSELET, Nicolas, 87000 LIMOGES (FR)
(74) Mandataire: Cabinet Chaillot

(57) **Abrégé**

Ce dispositif comporte : un porte-lame(s) (2) déplaçable en translation ; une lame (3) ou au moins deux lames parallèles entre elles disposée(s) sur le porte-lame(s) et apte(s) à racler, lors du déplacement en translation dudit porte-lame, une masse de pâte amenée à l'avant de celle(s)-ci pour étaler la masse de pâte en une couche ; et un organe de répartition de la pâte disposé devant la ou les lames (3). L'organe de répartition de la pâte consiste en un bouclier de poussée de la pâte, formé par une pièce allongée (4) comportant une partie (4a) verticale en position de montage, laquelle est solidaire ou rendue solidaire de la ou des lames (3) en laissant libre la région (3a) de bordure inférieure de celle(s)-ci pour permettre le raclage de la pâte, et qui est repliée à sa partie supérieure, dans le sens d'avance du porte-lame(s), pour former un surplomb (4b) dont la face inférieure constitue, avec la face libre de la partie verticale (4a) du bouclier de poussée (4), un espace (4c) de confinement de la pâte pénétrant dans celui-ci en vue de sa répartition et de son étalement.

## Description

La présente invention concerne la fabrication de pièces céramiques par stéréolithographie. Ces pièces céramiques sont des pièces crues destinées à être soumises à des opérations de nettoyage, déliantage et frittage pour obtenir des pièces céramiques finies.

La stéréolithographie comprend généralement les étapes suivantes pour l'obtention de telles pièces crues :
- on construit, par conception assistée par ordinateur, un modèle informatique de la pièce à fabriquer, modèle dont les dimensions sont plus grandes que celles de la pièce à fabriquer afin de prévoir un retrait de la céramique au cours de la fabrication de la pièce ;
- on forme, sur un support rigide ou sur une pièce en cours de fabrication, une première couche d'une composition photodurcissable comprenant généralement au moins une matière céramique, au moins un dispersant, au moins un monomère et/ou oligomère photodurcissable, au moins un photoinitiateur et au moins un plastifiant ;
- on fait durcir la première couche de la composition photodurcissable, par irradiation selon un motif défini à partir du modèle pour ladite couche, formant un premier étage ;
- on forme, sur le premier étage, une seconde couche de la composition photodurcissable ;
- on fait durcir la seconde couche de la composition photodurcissable, par irradiation selon un motif défini pour ladite couche, formant un deuxième étage, cette irradiation s'effectuant par balayage laser de la surface libre de la composition photodurcissable étalée ou par un système de projection à diodes ;
- optionnellement, on répète les étapes ci-dessus pour obtenir la pièce à l'état cru.

Dans une fabrication par voie pâteuse, le support rigide est un plateau de travail supportant les différentes couches de la pièce en cours de construction ainsi que la pâte et l'on forme chacune des couches par abaissement du plateau de travail et étalement d'une épaisseur de pâte prédéfinie. Une réserve de pâte est stockée dans des réservoirs qui sont automatiquement vidés d'une quantité de pâte prédéfinie à chaque couche à l'aide d'un piston. Cela crée un bourrelet de pâte à étaler sur la couche supérieure de la pièce en cours de fabrication qui aura été abaissée auparavant par le plateau de travail.

Chaque couche est étalée par raclage par une lame de raclage qui balaye la surface de travail du plateau de travail, par exemple en avançant suivant une direction horizontale rectiligne.

Dans ces conditions, il apparaît des couches irrégulières et non homogènes en termes d'épaisseur, laquelle va de quelques dizaines de microns à plusieurs millimètres. En conséquence, la pièce ne présentera pas un bon aspect extérieur et des contraintes internes indésirées peuvent apparaître en son sein, si bien que les pièces fabriquées doivent être mises au rebut.

De plus, des efforts de raclage importants peuvent être engendrés, lors de la phase de construction par couches, si bien que les pièces se brisent pendant leur construction.

Le brevet américain US6764636 décrit un dispositif de raclage à base de rouleaux, permettant de donner du mouvement à la pâte ou d'en diminuer la viscosité pour éviter que la pâte ne remonte le long de la lame, les rouleaux permettant de faire redescendre la pâte et de la mettre à la disposition de la lame en la distribuant de façon homogène sur les côtés. Ce dispositif n'est cependant pas adapté à des compositions très pâteuses et s'avère peu pratique en utilisation, du fait de la difficulté à le nettoyer après utilisation.

La présente invention a pour but de remédier à ces inconvénients, à savoir d'améliorer l'homogénéité de chaque couche de pâte étalée, d'éviter des efforts de raclage trop importants qui peuvent détruire les pièces en construction, et de rendre plus aisé le nettoyage du dispositif de raclage.

A cet effet, il est prévu, selon l'invention, que l'étalement uniforme de la pâte est assuré par une pièce de conception simple, dite « bouclier de poussée », appliquée devant la lame, ayant avantageusement un profil en demi-voûte ou similaire, délimitant un espace ouvert dans la direction d'avance du porte-lame, un tel espace recevant la pâte, laquelle peut « recirculer » facilement dans la demi-voûte ou similaire pour une répartition homogène sur toute la longueur du bouclier et pendant toute l'avance.

La présente invention a donc d'abord pour objet un dispositif d'application en couches d'une pâte pour un appareil de fabrication de pièces céramiques par stéréolithographie, ledit dispositif comportant :
- un porte-lame(s) déplaçable en translation ;
- une lame ou au moins deux lames parallèles entre elles disposée(s) sur le porte-lame(s) et apte (s) à racler, lors du déplacement en translation dudit porte-lame(s), une masse de pâte amenée à l'avant de celle (s)-ci pour étaler la masse de pâte en une couche ; et
- un organe de répartition de la pâte disposé devant la ou les lames,
caractérisé par le fait que l'organe de répartition de la pâte consiste en un bouclier de poussée de la pâte, formé par une pièce allongée comportant une partie verticale en position de montage, laquelle est solidaire ou rendue solidaire de la ou des lames en laissant libre la région de bordure inférieure de celle(s)-ci pour permettre le raclage de la pâte, et qui est repliée à sa partie supérieure, dans le sens d'avance du porte-lame(s), pour former un surplomb dont la face inférieure constitue, avec la face libre de la partie verticale du bouclier de poussée, un espace de confinement de la pâte pénétrant dans celui-ci en vue de sa répartition et de son étalement.

Dans le cas où l'on utilise au moins deux lames de raclage parallèles entre elles, celles-ci peuvent être disposées accolées ou espacées, leurs bords étant disposés à des hauteurs échelonnées, le bord de raclage de la lame d'attaque étant le plus élevé par rapport à la surface de travail.

Conformément à différents modes de réalisation particuliers :
- la face libre de la partie verticale du bouclier de poussée est réunie avec la face inférieure de la partie en surplomb par une région cintrée de concavité tournée vers l'espace de confinement ;
- la région de bordure libre de la face inférieure de la partie en surplomb du bouclier de poussée présente un retour vers l'espace de confinement pour tendre à rabattre la pâte vers le bas en position d'avance du porte-lame(s) sans refermer l'ouverture du bouclier de poussée ;

- la face libre de la partie verticale du bouclier de poussée est verticale ou cintrée de concavité tournée vers l'espace de confinement ou inclinée vers l'intérieur de l'espace de confinement du bouclier de poussée ;
- la face inférieure de la partie en surplomb du bouclier de poussée est horizontale plane ou cintrée de concavité tournée vers l'espace de confinement.

Le bouclier de poussée peut avantageusement occuper toute la largeur de la ou des lames.

Conformément à une caractéristique particulière intéressante, le bouclier de poussée est fermé à chacune de ses extrémités par une plaque, laquelle peut se prolonger au-delà de l'espace de confinement pour assurer un guidage de la pâte vers l'espace de confinement du bouclier de poussée. Avantageusement, les faces internes des plaques de fermeture peuvent être inclinées vers l'extérieur de l'espace de confinement pour faciliter le guidage de la pâte entrant dans cet espace.

La présente invention porte également sur un portique destiné à se déplacer au-dessus d'un plateau de travail d'un appareil de fabrication de pièces céramiques par stéréolithographie, caractérisé par le fait qu'il comporte au moins un dispositif tel que défini ci-dessus, disposé de telle sorte que le bord libre de la lame de raclage ou de la lame d'attaque dans le cas de plusieurs lames parallèles est apte à étaler par raclage des couches de pâte sur la surface de travail, lequel est apte à être maintenu et déplacé dans une position haute, relevée au-dessus du plan de travail, lorsque la ou les lames associées ne sont pas actives.

Le portique selon l'invention peut comporter deux dispositifs tels que définis ci-dessus, le premier étant actif pour le raclage dans un sens d'avance, et le second étant actif pour le raclage dans le sens opposé. Dans cette disposition, les deux porte-lame(s) sont disposés parallèlement entre eux, et la ou les lame(s) associées à chaque porte-lame(s) sont avantageusement disposées à l'opposé l'une de l'autre en étant tournées vers l'extérieur.

La présente invention concerne également une machine de fabrication de pièces crues en matériau céramique par stéréolithographie suivant laquelle des couches d'une pâte thermodurcissable sont amenées successivement à durcir par irradiation selon un motif défini pour chaque couche, ladite machine comprenant :
- un bâti encadrant un plateau de travail horizontal comportant une surface de travail ;
- un portique tel que défini ci-dessus ; et
- des moyens d'irradiation en regard du plateau de travail pour irradier chaque couche une fois étalée pour la faire durcir dans le motif préalablement défini avant d'étaler la couche suivante, laquelle est à son tour durcie dans le motif défini.

Pour mieux illustrer l'objet de la présente invention, on va en décrire ci-après, à titre indicatif et non limitatif, plusieurs modes de réalisation avec référence au dessin annexé.

Sur ce dessin :
[Fig. 1] est une vue schématique en perspective montrant de face un dispositif conforme à un premier mode de réalisation de la présente invention ;
[Fig. 2] représente à plus grande échelle la région en bas à gauche de la Figure 1 délimitée, à l'avant, par une coupe selon un plan vertical ;
[Fig. 3] est une vue de la face avant du dispositif de la Figure 1 ;
[Fig. 4] est une vue de la face arrière du dispositif de la Figure 1 ;
[Fig. 5] est une vue en coupe verticale de la partie lame + répartiteur de pâte conforme à un deuxième mode de réalisation de la présente invention ;
[Fig. 6] est une vue de dessous du répartiteur de pâte de la Figure 5 ;
[Fig. 7] est une vue en coupe verticale de la partie lame + répartiteur de pâte conforme à un troisième mode de réalisation de la présente invention ; et
[Fig. 8] est une vue de dessous du répartiteur de pâte de la Figure 7.

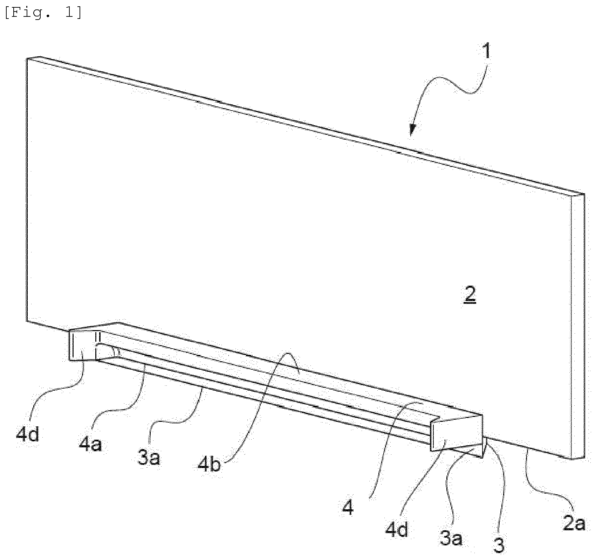

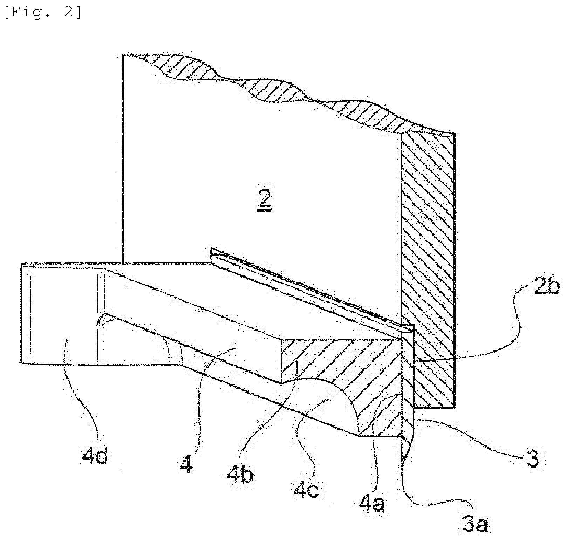

Si l'on se réfère aux Figures 1 à 4, on peut voir que l'on a représenté de façon schématique un dispositif 1 selon un premier mode de réalisation de l'invention pour l'application en couches d'une matière pâteuse selon un procédé de fabrication de pièces céramiques par stéréolithographie.

Le dispositif 1 comporte un porte-lame 2, une lame 3 portée à l'avant par ce dernier, et un répartiteur de pâte 4 monté à l'avant de la lame 3.

Le porte-lame 2 est représenté ici de façon schématique sous la forme d'une simple plaque rectangulaire en métal ou en matière plastique rigide.

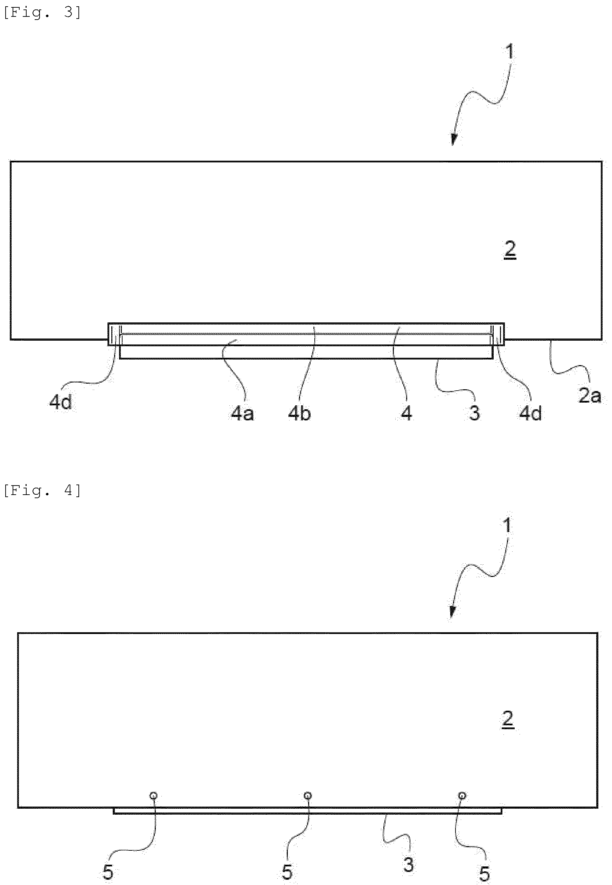

Le long de la bordure inférieure 2a du porte-lame 2 est pratiquée sur sa face avant dans sa position d'avance une échancrure rectangulaire centrale 2b recevant la lame 3, laquelle est maintenue dans l'échancrure 2b par des vis 5 qui traversent le porte-lame 2 par sa face arrière (Figure 4) . La lame 3 dépasse en partie inférieure du porte-lame 2 afin que sa pointe 3a puisse assurer le raclage.

A l'avant de la lame 3 est disposé le répartiteur de pâte 4, lequel consiste en une pièce allongée en métal ou en matière plastique ou en matière céramique sous la forme d'un bouclier de poussée de la pâte.

Le bouclier de poussée 4 présente une partie 4a verticale en position de montage qui est appliquée contre la lame 3 et une partie horizontale 4b en surplomb, qui forment à l'avant un espace 4c dit de confinement de la pâte.

L'espace 4c est délimité par une paroi en arc de cercle, le bouclier de poussée ayant ainsi la forme générale d'une demi-voûte.

La pâte qui est amenée devant le bouclier de poussée sera amenée à se répartir tout le long de celui-ci au fur et à mesure de la poussée exercée par le porte-lame 2 en déplacement vers l'avant. Elle aura également tendance à être rabattue vers le bas pour « circuler » et assurer une meilleure répartition.

Le bouclier de poussée 4 est par ailleurs fermé à chacune de ses deux extrémités par une plaque ou aile de fermeture 4d perpendiculaire à la ligne longitudinale moyenne de celui-ci, chaque plaque 4d se prolongeant à l'avant au-delà de l'espace de confinement 4c.

Les faces intérieures des plaques de fermeture 4d sont inclinées vers l'extérieur, ce qui permet de faciliter le guidage de la pâte dans l'espace de confinement 4c.

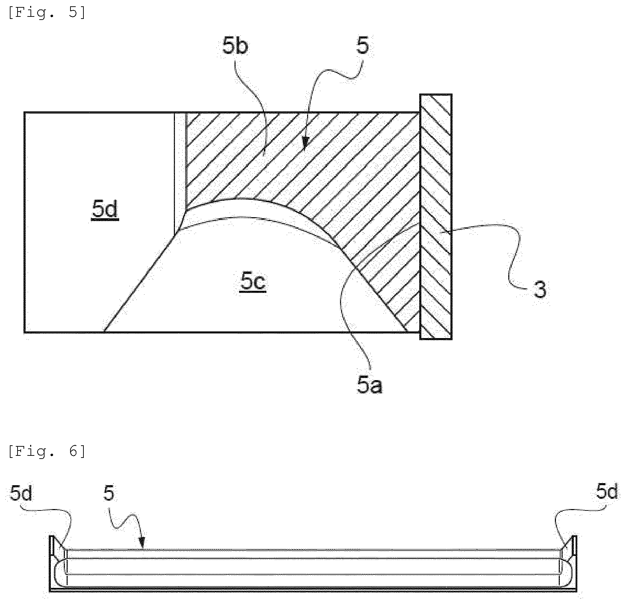

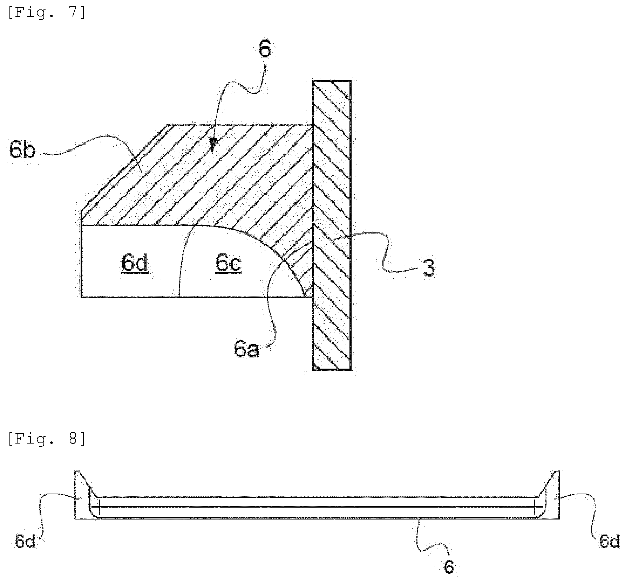

Si l'on se réfère aux Figures 5 et 7, on peut voir que l'on a représenté des variantes de forme de réalisation du bouclier de poussée 4, les boucliers de poussée étant désignés par les chiffres de référence respectivement 5 et 6, avec les indices associés pour les différentes parties du bouclier.

La forme de l'espace de confinement 5c du bouclier 5 peut être dite conique, arrondie vers le haut. Son fonctionnement a donné toute satisfaction.

La forme de l'espace de confinement 6c peut être dite arrondie, ouverte sur l'avant. Elle a également donné toute satisfaction.

## Revendications

1. Dispositif d'application en couches d'une pâte pour un appareil de fabrication de pièces céramiques par stéréolithographie, ledit dispositif comportant :
- un porte-lame(s) (2) déplaçable en translation ;
- une lame (3) ou au moins deux lames parallèles entre elles disposée(s) sur le porte-lame(s) et apte(s) à racler, lors du déplacement en translation dudit porte-lame(s), une masse de pâte amenée à l'avant de celle(s)-ci pour étaler la masse de pâte en une couche ; et
- un organe de répartition de la pâte disposé devant la ou les lames (3),
**caractérisé par le fait que** l'organe de répartition de la pâte consiste en un bouclier de poussée de la pâte, formé par une pièce allongée (4) comportant une partie (4a) verticale en position de montage, laquelle est solidaire ou rendue solidaire de la ou des lames (3) en laissant libre la région (3a) de bordure inférieure de celle(s)-ci pour permettre le raclage de la pâte, et qui est repliée à sa partie supérieure, dans le sens d'avance du porte-lame(s), pour former un surplomb (4b) dont la face inférieure constitue, avec la face libre de la partie verticale (4a) du bouclier de poussée (4), un espace (4c) de confinement de la pâte pénétrant dans celui-ci en vue de sa répartition et de son étalement.

2. Dispositif selon la revendication 1, **caractérisé par le fait que** la face libre de la partie verticale (4a) du bouclier de poussée (4) est réunie avec la face inférieure de la partie en surplomb (4b) par une région cintrée de concavité tournée vers l'espace de confinement (4c).

3. Dispositif selon l'une des revendications 1 et 2, **caractérisé par le fait que** la région de bordure libre de la face inférieure de la partie en surplomb (4b) du bouclier de poussée (4) présente un retour vers l'espace de confinement (4c) pour tendre à rabattre la pâte vers le bas en position d'avance du porte-lame(s) (2) sans refermer l'ouverture du bouclier de poussée.

4. Dispositif selon l'une des revendications 1 à 3, **caractérisé par le fait que** la face libre de la partie verticale (4a) du bouclier de poussée (4) est verticale ou cintrée de concavité tournée vers l'espace de confinement (4c) ou inclinée vers l'intérieur de l'espace de confinement (4c) du bouclier de poussée (4).

5. Dispositif selon l'une des revendications 1 à 4, **caractérisé par le fait que** la face inférieure de la partie en surplomb (4b) du bouclier de poussée (4) est horizontale plane ou cintrée de concavité tournée vers l'espace de confinement (4c).

6. Dispositif selon l'une des revendications 1 à 5, **caractérisé par le fait que** le bouclier de poussée (4) occupe toute la largeur de la ou des lames (3).

7. Dispositif selon l'une des revendications 1 à 6, **caractérisé par le fait que** le bouclier de poussée (4) est fermé à chacune de ses extrémités par une plaque (4d), laquelle peut se prolonger au-delà de l'espace de confinement (4c) pour assurer un guidage de la pâte vers l'espace de confinement (4c) du bouclier de poussée (4).

8. Dispositif selon la revendication 7, **caractérisé par le fait que** les faces internes des plaques de fermeture (4d) sont inclinées vers l'extérieur de l'espace de confinement (4c) pour faciliter le guidage de la pâte entrant dans cet espace.

9. Portique destiné à se déplacer au-dessus d'un plateau de travail d'un appareil de fabrication de pièces céramiques par stéréolithographie, **caractérisé par le fait qu'**il comporte au moins un dispositif tel que défini à l'une des revendications 1 à 8, disposé de telle sorte que le bord libre de la lame de raclage ou de la lame d'attaque dans le cas de plusieurs lames parallèles est apte à étaler par raclage des couches de pâte sur la surface de travail, lequel est apte à être maintenu et déplacé dans une position haute, relevée au-dessus du plan de travail, lorsque la ou les lames associées ne sont pas actives.

10. Portique selon la revendication 9, **caractérisé par le fait qu'**il comporte deux dispositifs tels que définis à l'une des revendications 1 à 8, le premier étant actif pour le raclage dans un sens d'avance, et le second étant actif pour le raclage dans le sens opposé.

11. Machine de fabrication de pièces crues en matériau céramique par stéréolithographie suivant laquelle des couches d'une pâte thermodurcissable sont amenées successivement à durcir par irradiation selon un motif défini pour chaque couche, ladite machine comprenant :
- un bâti encadrant un plateau de travail horizontal comportant une surface de travail ;
- un portique tel que défini à l'une des revendications 9 et 10 ; et
- des moyens d'irradiation en regard du plateau de travail pour irradier chaque couche une fois étalée pour la faire durcir dans le motif préalablement défini avant d'étaler la couche suivante, laquelle est à son tour durcie dans le motif défini.
